# EUROPEAN PATENT SPECIFICATION

(11) **EP 4 527 262 B1**
(45) Date of publication and mention of the grant of the patent: **20.05.2026**
(21) Application number: 24192037.0
(22) Date of filing: 31.07.2024
(51) Int. Cl.: A47J 31/44

(54) **A COFFEE MAKER COMPRISING A FILTER HOLDER**
KAFFEEMASCHINE MIT FILTERHALTER
MACHINE À CAFÉ COMPRENANT UN PORTE-FILTRE

(30) Priority: 21.09.2023 TR 202311771
(43) Date of publication of application: 26.03.2025
(73) Proprietor: Arçelik Anonim Sirketi, 34445 Istanbul (TR)
(72) Inventor: ZHENG, Todd, 34445 Istanbul (TR); XIA, Marko, 34445 Istanbul (TR)

(56) References cited:
- EP-A1- 4 179 928
- EP-B1- 3 054 822
- AU-A1- 2012 238 276
- US-A- 2 034 940
- US-A1- 2012 052 171

## Description

The present invention relates to a coffee maker comprising a filter holder.

As a result of the widespread consumption of different types of coffee in daily life and the technological advancements, different types of coffee makers have been developed. Ground coffee varieties obtained from coffee beans ground by means of a grinder are used in said coffee makers. One of the most commonly used types of coffee is espresso. The first step in brewing types of coffee such as espresso is to place the ground coffee in the receptacle of a filter holder and compress it. Equipment called tamper is used to compress the coffee placed in the filter holder receptacle. Afterwards, the filter holder is attached to a headpiece on the espresso maker and the coffee is brewed. Since a certain amount of coffee is placed in the filter holder receptacle, coffee spoons suitable for the size of the receptacle are used. However, said spoons are put in a drawer after use and over time, can become difficult to find due to other kitchen utensils. Moreover, coffee spoons placed next to other kitchen utensils may break and become unusable.

In the state of the art European Patent No. EP2190326B1, a coffee maker comprising a filter holder is disclosed.

In the state of the art European Patent No. EP3054822B1, a coffee maker comprising a filter holder is disclosed.

The aim of the present invention is the realization of a filter holder which provides ease of use.

The filter holder realized in order to attain the aim of the present invention, explicated in the first claim and the respective claims thereof, is suitable to be used by being attached to a headpiece of a coffee maker having a body and said headpiece provided on the body, and comprises a receptacle which filters the coffee placed therein; a handle which is connected to the receptacle; at least one housing which is provided on the handle; at least one opening which provides access to the housing; and a spoon which is configured to be stored in the housing, which is removably inserted into the housing by passing through the opening and which has a hollow part suitable for carrying the coffee and a handle part connected to the hollow part. Thus, the spoon is stored in the handle of the filter holder and is prevented from being lost or broken after use.

In an embodiment of the present invention, the spoon has a lid which is provided on the handle part and which at least partially covers the opening when the spoon is inserted into the housing. The lid has the same form as the opening. Thus, when the spoon is inserted into the housing, the lid completely covers the opening. Consequently, when the spoon is inserted into the housing, foreign materials such as dust, dirt, etc. are prevented from entering the housing.

In an embodiment of the present invention, the lid becomes flush with the handle surface when the spoon is inserted into the housing. Thus, the spoon appears as an integral part of the handle and does not create an inconvenient appearance for the user.

In another embodiment of the present invention, the width of the housing decreases from the opening towards the hollow part. Thus, the spoon is more easily centered in the housing and can be quickly attached to the filter holder.

In another embodiment of the present invention, at least one magnet and at least one metal part are provided such that one is positioned on the lid and the other on the handle. Thus, when inserted into the housing, the spoon is fixed by holding onto the handle due to magnetization. Consequently, the spoon is enabled to be fixed to the handle in a simple, easy and quick manner.

In another embodiment of the present invention, the lid has a circular base and a lateral surface extending perpendicularly from the base, and a threaded part on the lateral surface, and the housing has at least one threaded channel shaped so as to engage the threaded part by rotating. Thus, the spoon is inserted into the housing by being rotated and fixed more securely.

In another embodiment of the present invention, the housing has at least one locking housing in the form of a recess, and the lid has at least one locking claw which fits into the locking housing when the spoon is inserted into the housing so as to enable the spoon to be fixed to the housing. Thus, the rotational movement is facilitated and the spoon is fixed to the housing in a quicker and easier manner.

In another embodiment of the present invention, the housing has at least two flexible claws, and the lid has at least one pin which is grasped by the claws when the spoon is inserted into the housing so as to enable the spoon to be fixed to the housing. Thus, the spoon can be easily inserted into the housing and taken out of the housing.

In another embodiment of the present invention, the housing has at least one recess, and the lid has at least protrusion which fits into the recess when the spoon is inserted into the housing so as to enable the spoon to be fixed to the housing. In this embodiment of the present invention, the protrusion is squeezed into the recess and enables the spoon to be securely fixed to the housing.

In another embodiment of the present invention, at least one serrated surface is provided on the lateral surface. Thus, the user is enabled to easily grasp the base part and to rotate the spoon in a safe manner without his/her slipping.

By means of the present invention, the spoon is enabled to be stored in the filter holder.

The filter holder realized in order to attain the aim of the present invention is illustrated in the attached figures, where:

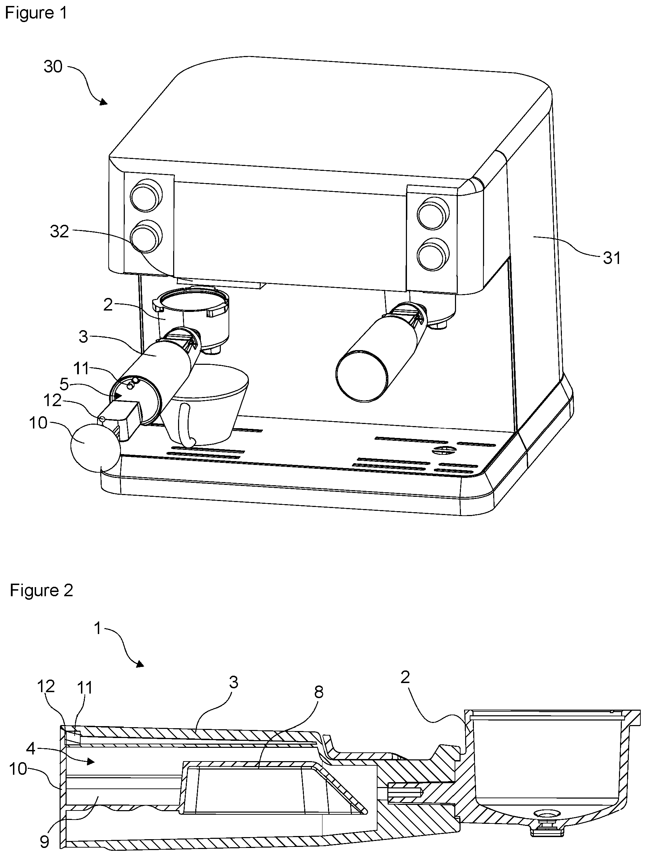

Figure 1 - is the perspective view of the coffee maker and the filter holder related to an embodiment of the present invention.
Figure 2 - is the sideways cross-sectional view of the filter holder related to an embodiment of the present invention.

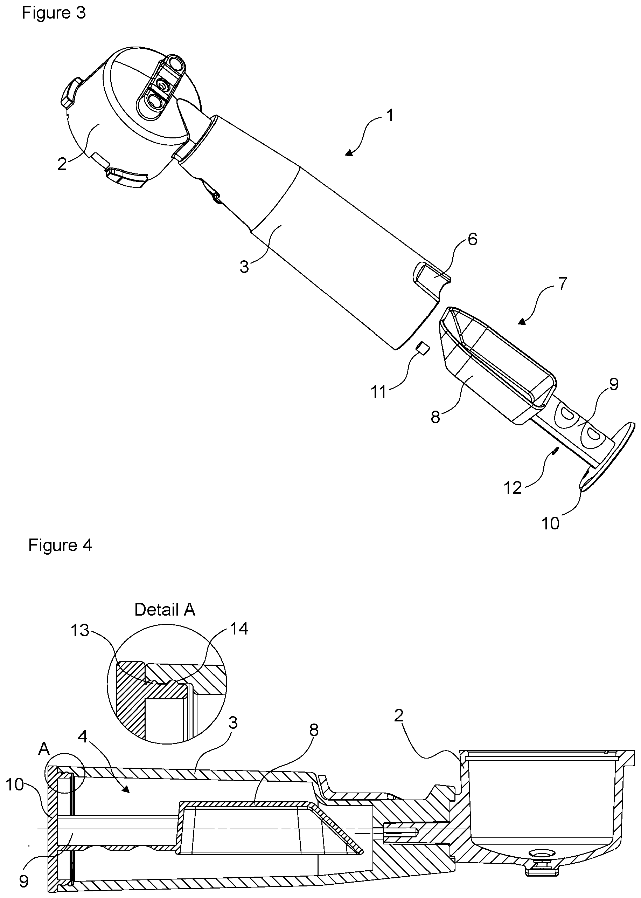

Figure 3 - is the exploded view of the filter holder related to an embodiment of the present invention.
Figure 4 - is the sideways cross-sectional view of the filter holder and the view of detail A related to another embodiment of the present invention.

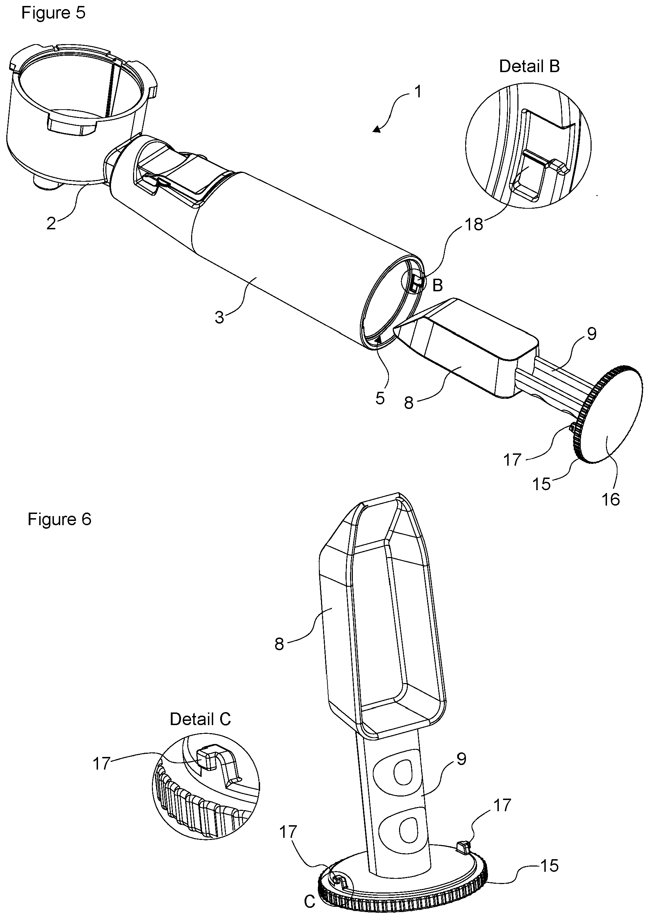

Figure 5 - is the exploded view of the filter holder and the enlarged view of detail B related to another embodiment of the present invention.
Figure 6 - is the perspective view of the spoon and the enlarged view of detail C related to another embodiment of the present invention.

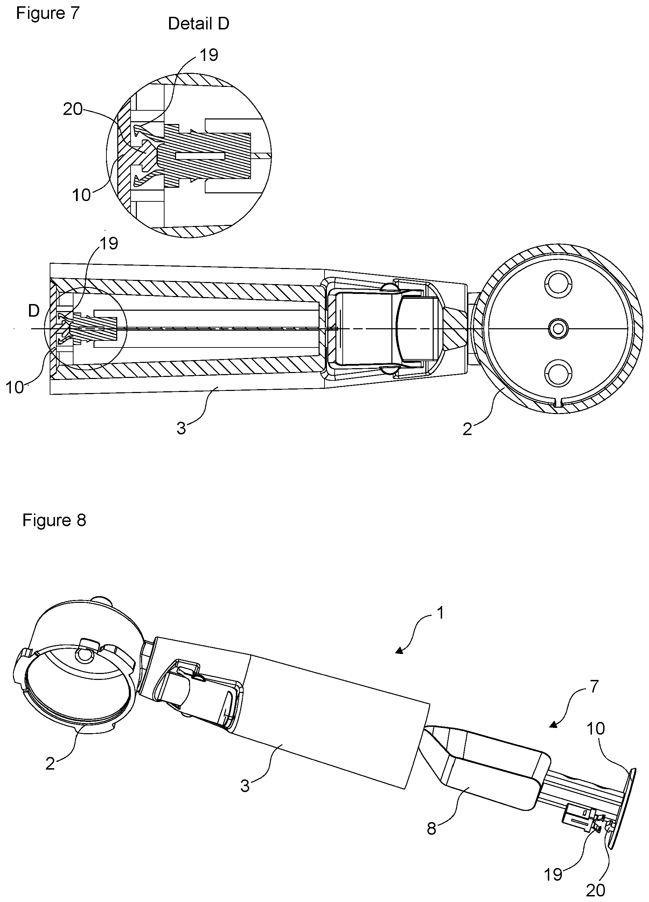

Figure 7 - is the top cross-sectional view of the filter holder and the enlarged view of detail D related to another embodiment of the present invention.
Figure 8 - is the exploded view of the filter holder related to another embodiment of the present invention.

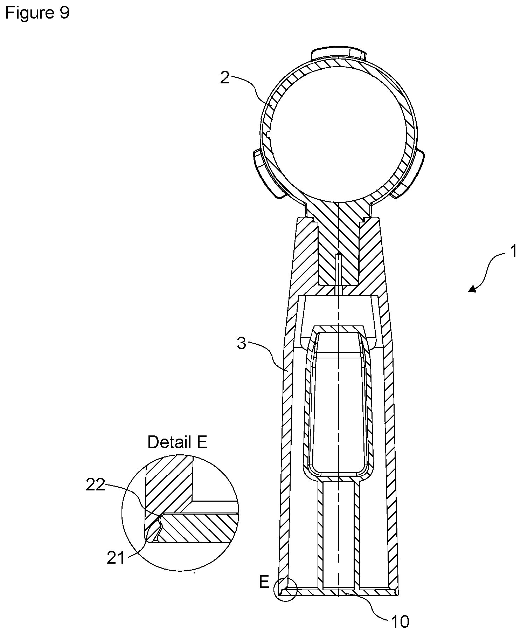

Figure 9 - is the top cross-sectional view of the filter holder and the enlarged view of detail E related to another embodiment of the present invention.

The elements illustrated in the figures are numbered as follows:
1. Filter holder
2. Receptacle
3. Handle
4. Housing
5. Opening
6. Cavity
7. Spoon
8. Hollow part
9. Handle part
10. Lid
11. Magnet
12. Metal part
13. Threaded section
14. Threaded channel
15. Lateral surface
16. Base
17. Locking claw
18. Locking housing
19. Claw
20. Pin
21. Recess
22. Protrusion
30. Coffee maker
31. Body
32. Headpiece

The filter holder (1) is suitable to be used by being attached to a headpiece (32) of a coffee maker (30) having a body (31) and said headpiece (32) provided on the body (31), and comprises a receptacle (2) which filters the coffee placed therein and a handle (3) which is connected to the receptacle (2). After the coffee is placed in the receptacle (2), the filter holder (1) is attached to the headpiece (32) and the coffee maker (30) is started to brew the coffee. The brewed coffee is filtered through a filter provided on the receptacle (2) and passes through a channel at the bottom of the receptacle (2) to be poured into a cup.

The filter holder (1) of the present invention comprises at least one housing (4) which is provided on the handle (3); at least one opening (5) which provides access to the housing (4); and a spoon (7) which is configured to be stored in the housing (4), which is removably inserted into the housing (4) by passing through the opening (5) and which has a hollow part (8) suitable for carrying the coffee and a handle part (9) connected to the hollow part (8). The housing (4) provided on the handle (3) is large enough to receive the spoon (7) comfortably. The housing (4) may have a cylindrical or cubic shape, but cylindrical shape is preferred for ease of use. The hollow part (8) preferably has a volume suitable for carrying the amount of coffee which can be held by the receptacle (2). Thus, the user can easily fill the receptacle (2) with a single spoon (7).

In an embodiment of the present invention, the spoon (7) has a lid (10) which is provided on the handle part (9) and which at least partially covers the opening (5) when the spoon (7) is inserted into the housing (4). After the spoon (7) is inserted into the housing (4), the lid (10) at least partially closes the opening (5). Thus, particles such as dust, dirt, etc. are prevented from entering the housing (4).

In an embodiment of the present invention, the lid (10) becomes flush with the handle (3) when the spoon (7) is inserted into the housing (4). Thus, the lid (10) appears as an integral part of the handle (3) and the user can use the filter holder (1) without compromising grip comfort.

In another embodiment of the present invention, the width of the housing (4) decreases from the opening (5) towards the hollow part (8). Thus, the spoon (7) can be more easily centered while being inserted into the housing (4).

In another embodiment of the present invention, at least one magnet (11) and at least one metal part (12) are provided such that one is positioned on the lid (10) and the other on the handle (3). Preferably, the magnet (11) is provided on the handle (3) and the metal part (12) is provided on the lid (10). Thus, when the spoon (7) is inserted into the housing (4), the magnet (11) attracts the metal part (12) and prevents the spoon (7) from leaving the housing (4). A cavity (6) is provided on the handle (3). When the user wants to remove the spoon (7) from the housing (4), he/she can easily push the lid (10) out by placing his/her finger into the cavity (6).

In another embodiment of the present invention, the lid (10) has a circular base (16) and a lateral surface (15) extending perpendicularly from the base (16), and a threaded part (13) on the lateral surface (15), and the housing (4) has at least one threaded channel (14) shaped so as to engage the threaded part (13) by rotating. Thus, the spoon (7) can be fixed to the housing (4) by being rotated from the base (16) of the lid (10). Consequently, the spoon (7) is enabled to be securely fixed to the handle (3).

In another embodiment of the present invention, the housing (4) has at least one locking housing (18) in the form of a recess, and the lid (10) has at least one locking claw (17) which fits into the locking housing (18) when the spoon (7) is inserted into the housing (4) so as to enable the spoon (7) to be fixed to the housing (4). The locking housing (18) is configured so as to allow the locking claw (17) to fit therein and move to a certain degree. After the spoon (7) is inserted into the housing (4), the locking claw (17) fits into the locking housing (18) and is fixed by being rotated for a certain amount.

In another embodiment of the present invention, the housing (4) has at least two flexible claws (19), and the lid (10) has at least one pin (20) which is grasped by the claws (19) when the spoon (7) is inserted into the housing (4) so as to enable the spoon (7) to be fixed to the housing (4). The claws (19) are flexible and curved. When the spoon (7) is inserted in the housing (4), the pin (20) is engaged by the claws (19) and is held by the claws (19), thus preventing the spoon (7) from leaving . Thus, the spoon (7) is enabled to be securely fixed to the housing (4).

In another embodiment of the present invention, the housing (4) has at least one recess (21), and the lid (10) has at least protrusion (22) which fits into the recess (21) when the spoon (7) is inserted into the housing (4) so as to enable the spoon (7) to be fixed to the housing (4). The recess (21) and the protrusion (22) have a matching and fitting form. The protrusion (22) is squeezed into the recess (21) such that it becomes necessary to apply force while fixing the spoon (7) into the housing (4).

In another embodiment of the present invention, at least one serrated surface is provided on the lateral surface (15). The serrated surface enables the user to grasp the lid (10) more easily. Thus, the user's hand can grasp and rotate the lid (10) in an easy and safe manner without slipping.

By means of the present invention, the spoon (7) is enabled to be stored in the filter holder (1) and is prevented from being lost when not in use. Thus, the filter holder (1) is enabled to be used more efficiently.

## Claims

1. A filter holder (1) which is suitable to be used by being attached to a headpiece (32) of a coffee maker (30) having a body (31) and said headpiece (32) provided on the body (31), and **comprising** a receptacle (2) which filters the coffee placed therein and a handle (3) which is connected to the receptacle (2), at least one housing (4) which is provided on the handle (3); at least one opening (5) which provides access to the housing (4); **characterized by** a spoon (7) which is configured to be stored in the housing (4), which is removably inserted into the housing (4) by passing through the opening (5) and which has a hollow part (8) suitable for carrying the coffee and a handle part (9) connected to the hollow part (8).

2. A filter holder (1) as in Claim 1, **characterized by** the spoon (7) having a lid (10) which is provided on the handle part (9) and which at least partially covers the opening (5) when the spoon (7) is inserted into the housing (4).

3. A filter holder (1) as in Claim 2, **characterized by** the lid (10) which becomes flush with the handle (3) when the spoon (7) is inserted into the housing (4).

4. A filter holder (1) as in any one of the above claims, **characterized by** the housing (4) the width of which decreases from the opening (5) towards the hollow part (8).

5. A filter holder (1) as in any one of the above claims, **characterized by** at least one magnet (11) and at least one metal part (12) are provided such that one is positioned on the lid (10) and the other on the handle (3).

6. A filter holder (1) as in any one of Claims 2 to 4, **characterized by** the lid (10) having a circular base (16) and a lateral surface (15) extending perpendicularly from the base (16), and a threaded part (13) on the lateral surface (15), and at least one threaded channel (14) provided on the housing (4) and shaped so as to engage the threaded part (13) by rotating.

7. A filter holder (1) as in any one of Claims 2 to 4, **characterized by** at least one locking housing (18) in the form of a recess provided on the housing (4) and at least one locking claw (17) which is provided on the lid (10) and which fits into the locking housing (18) when the spoon (7) is inserted into the housing (4) so as to enable the spoon (7) to be fixed to the housing (4).

8. A filter holder (1) as in any one of Claims 2 to 4, **characterized by** at least two flexible claws (19) provided on the housing (4), and at least one pin (20) which is provided on the lid (10) and which is grasped by the claws (19) when the spoon (7) is inserted into the housing (4) so as to enable the spoon (7) to be fixed to the housing (4).

9. A filter holder (1) as in any one of Claims 2 to 4, **characterized by** at least one recess (21) provided on the housing (4), and at least protrusion (22) which is provided on the lid (10) and which fits into the recess (21) when the spoon (7) is inserted into the housing (4) so as to enable the spoon (7) to be fixed to the housing (4).

10. A filter holder (1) as in any one of Claims 6 to 9, **characterized by** at least one serrated surface which is provided on the lateral surface (15).

## Patentansprüche

1. Ein Filterhalter (1), der dazu geeignet ist, durch Anbringen an einem Kopfteil (32) einer Kaffeemaschine (30) verwendet zu werden, wobei die Kaffeemaschine (30) einen Körper (31) aufweist und das Kopfteil (32) an dem Körper (31) vorgesehen ist, und der einen Behälter (2), der den darin befindlichen Kaffee filtert, sowie einen Griff (3) umfasst, der mit dem Behälter (2) verbunden ist, mindestens ein Gehäuse (4), das am Griff (3) vorgesehen ist; mindestens eine Öffnung (5), die den Zugang zum Gehäuse (4) ermöglicht; gekennzeichnet ist es dadurch, dass ein Löffel (7) vorgesehen ist, der so ausgebildet ist, dass er im Gehäuse (4) aufbewahrt werden kann, der durch die Öffnung (5) hindurch abnehmbar in das Gehäuse (4) eingesetzt wird und der einen zur Aufnahme des Kaffees geeigneten Hohlteil (8) sowie einen mit dem Hohlteil (8) verbundenen Griffteil (9) aufweist.

2. Ein Filterhalter (1), wie in Anspruch 1 aufgeführt, **ist dadurch gekennzeichnet, dass** der Löffel (7) einen Deckel (10) aufweist, der am Griffteil (9) angeordnet ist und die Öffnung (5) mindestens teilweise abdeckt, wenn der Löffel (7) in das Gehäuse (4) eingesetzt ist.

3. Ein Filterhalter (1), wie in Anspruch 3 aufgeführt, **ist dadurch gekennzeichnet, dass** der Deckel (10) bündig mit dem Griff (3) abschließt, wenn der Löffel (7) in das Gehäuse (4) eingesetzt ist.

4. Ein Filterhalter (1), wie in einem der vorherigen Ansprüchen aufgeführt, **ist dadurch gekennzeichnet, dass** das Gehäuse (4) eine Breite aufweist, die sich von der Öffnung (5) zum Hohlraum (8) hin verjüngt.

5. Ein Filterhalter (1), wie in einem der vorherigen Ansprüchen aufgeführt, **ist dadurch gekennzeichnet, dass** mindestens ein Magnet (11) und mindestens ein Metallteil (12) vorgesehen sind, wobei der eine am Deckel (10) und der andere am Griff (3) angeordnet ist.

6. Ein Filterhalter (1), wie in einem der Ansprüche 2 bis 4 aufgeführt, **ist dadurch gekennzeichnet, dass** der Deckel (10) eine kreisförmige Basis (16) und eine sich senkrecht von der Basis (16) erstreckende Seitenfläche (15) sowie einen Gewindeabschnitt (13) an der Seitenfläche (15) aufweist, und dass am Gehäuse (4) mindestens ein Gewindekanal (14) vorgesehen ist, der so geformt ist, dass er durch Drehen in den Gewindeabschnitt (13) eingreift.

7. Ein Filterhalter (1), wie in einem der Ansprüche 2 bis 4 aufgeführt, **ist dadurch gekennzeichnet, dass** mindestens eine Verriegelungsaufnahme (18) in Form einer am Gehäuse (4) vorgesehenen Aussparung und mindestens eine Verriegelungsklaue (17) vorgesehen sind, die am Deckel (10) angeordnet ist und beim Einsetzen des Löffels (7) in das Gehäuse (4) in die Verriegelungsaufnahme (18) eingreift, um den Löffel (7) am Gehäuse (4) zu befestigen.

8. Ein Filterhalter (1), wie in einem der Ansprüche 2 bis 4 aufgeführt, **ist dadurch gekennzeichnet, dass** mindestens zwei am Gehäuse (4) angeordnete flexible Klauen (19) und mindestens ein am Deckel (10) angeordneter Stift (20) vorgesehen sind, der von den Klauen (19) ergriffen wird, wenn der Löffel (7) in das Gehäuse (4) eingeführt wird, um so den Löffel (7) am Gehäuse (4) zu befestigen.

9. Ein Filterhalter (1), wie in einem der Ansprüche 2 bis 4 aufgeführt, **ist dadurch gekennzeichnet, dass** am Gehäuse (4) mindestens eine Aussparung (21) vorgesehen ist und am Deckel (10) mindestens ein Vorsprung (22) vorgesehen ist, der in die Aussparung (21) eingreift, wenn der Löffel (7) in das Gehäuse (4) eingesetzt wird, um so den Löffel (7) am Gehäuse (4) zu befestigen.

10. Ein Filterhalter (1), wie in einem der vorherigen Ansprüchen aufgeführt, **ist dadurch gekennzeichnet, dass** an der Seitenfläche (15) mindestens eine gezahnte Fläche vorgesehen ist.

## Revendications

1. Porte-filtre (1) apte à être utilisé en étant fixé à une tête d'infusion (32) d'une machine à café (30) comportant un corps (31) et ladite tête d'infusion (32) dispose sur le corps (31), et **comprenant** un récipient (2) destiné à filtrer le café qui y est placé et une poignée (3) reliée au récipient (2), au moins un logement (4) aménagé dans la poignée (3) ; au moins une ouverture (5) permettant l'accès au logement (4) ; **caractérisé en ce qu'**il comprend une cuillère (7) configurée pour être logée dans ledit logement (4), insérée de manière amovible dans le logement (4) en passant par l'ouverture (5), et comprenant une partie creuse (8) apte à contenir le café ainsi qu'une partie de préhension (9) reliée à ladite partie creuse (8).

2. Porte-filtre (1) selon la Revendication 1, **caractérisé en ce que** la cuillère (7) comprend un couvercle (10) disposé sur la poignée (9) et apte à recouvrir au moins partiellement l'ouverture (5) lorsque la cuillère (7) est insérée dans le logement (4).

3. Porte-filtre (1) selon la Revendication 2, **caractérisé en ce que** le couvercle (10) affleure la poignée (3) lorsque la cuillère (7) est insérée dans le logement (4).

4. Porte-filtre (1) selon l'une quelconque des Revendications précédentes, **caractérisé en ce que** le logement (4) présente une largeur qui diminue depuis l'ouverture (5) vers la partie creuse (8).

5. Porte-filtre (1) selon l'une quelconque des Revendications précédentes, **caractérisé en ce qu**'au moins un aimant (11) et au moins une pièce métallique (12) sont prévus de sorte que l'un soit disposé sur le couvercle (10) et l'autre sur la poignée (3).

6. Porte-filtre (1) selon l'une quelconque des Revendications 2 à 4, **caractérisé en ce que** le couvercle (10) comprend une base circulaire (16) et une surface latérale (15) s'étendant perpendiculairement à partir de la base (16), ladite surface latérale (15) comportant une partie filetée (13), et **en ce qu'**au moins un canal fileté (14) est prévu dans le logement (4), configuré pour s'engager avec la partie filetée (13) par rotation.

7. Porte-filtre (1) selon l'une quelconque des Revendications 2 à 4, **caractérisé en ce qu**'au moins un logement de verrouillage (18) sous forme d'un évidement prévu sur le logement (4), et au moins une griffe de verrouillage (17) prévue sur le couvercle (10) et qui s'insère dans le logement de verrouillage (18) lorsque la cuillère (7) est insérée dans le logement (4), de manière à permettre la fixation de la cuillère (7) au logement (4).

8. Porte-filtre (1) selon l'une quelconque des Revendications 2 à 4, **caractérisé en ce qu'**au moins deux griffes flexibles (19) prévues sur le logement (4), et **en ce qu'**au moins une broche (20) qui est prévue sur le couvercle (10) et qui est saisie par les griffes (19) lorsque la cuillère (7) est insérée dans le logement (4), de manière à permettre la fixation de la cuillère (7) au logement (4).

9. Porte-filtre (1) selon l'une quelconque des Revendications 2 à 4, **caractérisé en ce qu'**au moins un évidement (21) prévu sur le logement (4), et au moins une saillie (22) qui est prévue sur le couvercle (10) et qui s'insère dans l'évidement (21) lorsque la cuillère (7) est insérée dans le logement (4), de manière à permettre la fixation de la cuillère (7) au logement (4).

10. Porte-filtre (1) selon l'une quelconque des Revendications 6 à 9, **caractérisé en ce qu'**au moins une surface dentée qui est prévue sur la surface latérale (15).
